# EUROPÄISCHE PATENTSCHRIFT

(11) **EP 2 700 016 B1**
(45) Veröffentlichungstag und Bekanntmachung des Hinweises auf die Patenterteilung: **12.07.2017**
(21) Anmeldenummer: 12721782.6
(22) Anmeldetag: 18.04.2012
(51) Int. Cl.: G06F 13/38, G06F 13/40, A01B 59/00, A01B 79/00, H04L 12/40, H04L 29/08

(54) **DATENKOMMUNIKATIONSSCHNITTSTELLE FÜR EIN LANDWIRTSCHAFTLICHES NUTZFAHRZEUG**
DATA COMMUNICATIONS INTERFACE FOR AN AGRICULTURAL VEHICLE
INTERFACE DE COMMUNICATION DE DONNÉES POUR UN VÉHICULE UTILITAIRE AGRICOLE

(30) Priorität: 21.04.2011 DE 102011007914
(43) Veröffentlichungstag der Anmeldung: 26.02.2014
(73) Patentinhaber: Deere & Company, 68163 Mannheim (DE)
(72) Erfinder: PETERS, Ole, 25724 Neufeld (DE); VON HOYNINGEN-HUENE, Martin, 69469 Weinheim (DE); PICKEL, Peter, 68199 Mannheim (DE); FLÖRCHINGER, Thomas, 68165 Mannheim (DE)
(74) Vertreter: John Deere GmbH & Co. KG
(86) Internationale Anmeldenummer: PCT/EP2012/057072
(87) Internationale Veröffentlichungsnummer: WO 2012/143389

(56) Entgegenhaltungen:
- EP-A2- 1 997 686
- WO-A1-91/14989
- US-A1- 2008 013 569
- US-B1- 7 855 573

## Beschreibung

Die Erfindung betrifft eine Datenkommunikationsschnittstelle für ein landwirtschaftliches Nutzfahrzeug, insbesondere einen landwirtschaftlichen Traktor.

Moderne landwirtschaftliche Nutzfahrzeuge weisen in aller Regel ein fahrzeuginternes Datenkommunikationsnetzwerk zur Vernetzung diverser Steuergeräte auf. Hierbei ist im Falle landwirtschaftlicher Traktoren eine zunehmende Tendenz zu erkennen, das fahrzeuginterne Datenkommunikationsnetzwerk auf elektrisch steuerbare Anbaugeräte, die an dem landwirtschaftlichen Traktor anbringbar sind, zu erweitern. Auf diese Weise ist eine automatisierte Durchführung von sich wiederholenden Arbeitsgängen durch entsprechende Steuerung des Anbaugeräts möglich. So geht beispielsweise aus der DE 10 2005 029 405 A1 eine Kombination aus einem landwirtschaftlichen Traktor und einer Ballenpresse hervor, bei der die Fahrtgeschwindigkeit des landwirtschaftlichen Traktors mittels einer zwischen dem landwirtschaftlichen Traktor und der Ballenpresse ausgebildeten Datenkommunikationsverbindung abhängig von einer an der Ballenpresse sensorisch erfassten Erntegutflussrate angepasst wird.

Der dem Anbaugerät zugeordnete Netzwerkabschnitt ist hierbei - neben diversen Stromversorgungsleitungen - über einen Schnittstellenstecker mit dem landwirtschaftlichen Traktor verbunden. Hierbei erfordern unterschiedliche Anbaugeräte abhängig von Modell und Technologiestand im Allgemeinen unterschiedliche Typen von Datenkommunikationsnetzwerken und damit Schnittstellensteckern. US2008013569 offenbart eine universelle Steuerung, die verschiedene Computerprotokolle unterstützt, einschließlich Ethernet und CAN-Bus. US7855573 offenbart eine Abschlussschaltung für einen CAN-Bus, die ein elektronisches Relais und eine Abschlussimpedanz enthält. Die Abschlussimpedanz ist an dem Endknoten des CAN-Busses so lange effektiv angeschlossen, bis eine Erweiterung des CAN-Busses an den ersten CAN-Busverbinder angeschlossen wird. Es ist daher Aufgabe der vorliegenden Erfindung, eine Datenkommunikationsschnittstelle für ein landwirtschaftliches Nutzfahrzeug anzugeben, die die Verwendung ein und desselben Schnittstellensteckers für unterschiedliche Typen von Datenkommunikationsnetzwerken erlaubt.

Diese Aufgabe wird durch eine Datenkommunikationsschnittstelle mit den Merkmalen des Patentanspruchs 1 gelöst.

Die Datenkommunikationsschnittstelle für ein landwirtschaftliches Nutzfahrzeug, insbesondere einen landwirtschaftlichen Traktor, mit einem Schnittstellenstecker, der ein Gehäuse aufweist, in das eine elektrische betätigbare Umschalteinrichtung, eine Kontrolleinheit sowie ein abschaltbarer Abschlusswiderstand eingebaut sind, wobei der Schnittstellenstecker mittels der elektrisch betätigbaren Umschalteinrichtung wahlweise mit einem ersten Datenkommunikationsnetzwerk in Gestalt eines CAN-Datenbusses und einem zweiten Datenkommunikationsnetzwerk in Gestalt eines Ethernet-Datennetzes verbindbar ist, wobei der CAN-Datenbus an einem dem Schnittstellenstecker zugeordneten Leitungsende mittels des abschaltbaren Abschlusswiderstands terminiert ist und die Kontrolleinheit den Schnittstellenstecker durch entsprechende Betätigung der Umschalteinrichtung ausschließlich dann mit dem CAN-Datenbus verbindet, wenn diese auf das Vorliegen eines zur Abschaltung des Abschlusswiderstands vorgesehenen Steuersignals schließt. Mit anderen Worten kann über den Schnittstellenstecker neben einem ersten Datenkommunikationsnetzwerk, das zur Vermeidung unerwünschter Leitungsreflexionen mittels eines Abschlusswiderstands zu terminieren ist, zumindest ein weiteres zweites Datenkommunikationsnetzwerk bereitgestellt werden, das eine Abschaltung des Abschlusswiderstands nicht erforderlich macht.

Die Umschalteinrichtung ist als Halbleiterschalter oder dergleichen ausgebildet. Alternativ ist auch die Verwendung eines elektromechanischen Schalters vorstellbar.

Die beiden Datenkommunikationsnetzwerke lassen sich über den gemeinsamen Schnittstellenstecker extern erweitern. Die externe Erweiterung kann beispielsweise zum Betreiben eines mit einem entsprechenden Netzwerkabschnitt ausgestatteten Anbaugeräts dienen. Wird der zusätzliche Netzwerkabschnitt des Anbaugeräts an den Schnittstellenstecker angeschlossen, so muss im Falle des ersten Datenkommunikationsnetzwerks der dem Schnittstellenstecker zugeordnete Abschlusswiderstand abgeschaltet werden. Die Terminierung hat dann mittels eines dem zusätzlichen Netzwerkabschnitt zugeordneten Abschlusswiderstands zu erfolgen. Folglich stellen das Vorliegen des Steuersignals sowie die damit einhergehende Abschaltung des Abschlusswiderstands zuverlässige Hinweise auf die gewünschte Bereitstellung des ersten Datenkommunikationsnetzwerks dar. In allen anderen Fällen verbleibt die Umschalteinrichtung in ihrer unbetätigten Ausgangsstellung und verbindet den Schnittstellenstecker mit dem zweiten Datenkommunikationsnetzwerk.

Die so gebildete duale Datenkommunikationsschnittstelle ermöglicht die Verwendung ein und desselben Schnittstellensteckers sowohl für das erste als auch das zweite Datenkommunikationsnetzwerk.

Vorteilhafte Weiterbildungen der erfindungsgemäßen Datenkommunikationsschnittstelle gehen aus den Unteransprüchen hervor.

Der CAN-Datenbus ist insbesondere als linearer Bus ausgebildet, bei dem eine Vielzahl unterschiedlicher Steuergeräte zur Überwachung und Steuerung von Betriebsfunktionen des landwirtschaftlichen Nutzfahrzeugs sowie eines daran angebrachten Anbaugeräts parallel an einer zentralen Datenleitung anschließbar ist. Zur Vermeidung unerwünschter Leitungsreflexionen ist an beiden Leitungsenden ein Abschlusswiderstand mit einem Wert in der Größenordnung von 120 Ohm vorgesehen.

Der CAN-Datenbus ist beispielsweise als ISOBUS entsprechend dem Standard ISO 11783 ausgebildet. Der Standard ISO 11783 spezifiziert ein serielles Datenkommunikationsnetzwerk zur Steuerung land- und forstwirtschaftlicher Nutzfahrzeuge einschließlich zugehöriger ISOBUS-basierter Anbaugeräte. Das serielle Datenkommunikationsnetzwerk umfasst zwei ungeschirmte Twisted-Pair-Leiterpaare in Gestalt eines Twisted-Quad-Kabels, wobei das erste Twisted-Pair-Leiterpaar der eigentlichen Datenübertragung und das zweite Twisted-Pair-Leiterpaar der Stromversorgung der als aktive Widerstandsschaltungen bzw. Terminating Bias Circuit (TBC) ausgebildeten Abschlusswiderstände dient. Die Übertragung der Daten über das erste Twisted-Pair-Leiterpaar erfolgt hierbei mit einer Datenübertragungsrate von 250 kbit/s.

Ferner kann das Ethernet-Datennetz gemäß dem Internet Protocol oder als Echtzeit-Ethernet ausgebildet sein. Ausgehend vom OSI-Modell ist eine Unterscheidung durch geeignete Auswertung des Data Link Layers möglich. Insofern ist auf der Softwareebene eine weitere Unterteilung des zweiten Datenkommunikationsnetzwerks denkbar.

Des Weiteren ist es vorstellbar, den Schnittstellenstecker als Implement BUS Breakaway Connector (IBBC) entsprechend dem Standard ISO 11783-2 auszubilden. Der typischerweise im Heckbereich des landwirtschaftlichen Nutzfahrzeugs angebrachte Implement BUS Breakaway Connector erlaubt einen Anschluss und Betrieb sämtlicher ISOBUS-basierter Anbaugeräte und umfasst neben verschiedenen Datenübertragungs- bzw. Steuerpins eine Vielzahl von Stromversorgungs- und Masseanschlüssen.

Für die Belange der vorliegenden Erfindung sind die folgenden Pins bzw. Anschlüsse des Implement BUS Breakaway Connector von Bedeutung, wobei die verwendeten Abkürzungen dem Standard ISO 11783-2 entnommen sind:

| | |
|---|---|
| ECU_PWR | Stromversorgungsanschluss für sämtliche elektronische Steuergeräte des Anbaugeräts (6-16 Vdc) |
| ECU_RTN | Galvanisch getrennter Masseanschluss für sämtliche elektronische Steuergeräte des Anbaugeräts |
| TBC_DIS | Steuerpin zur Abschaltung des dem IBBC zugeordneten Terminating Bias Circuit |
| TBC_PWR | Stromversorgungsanschluss für das Terminating Bias Circuit (TBC) des Anbaugeräts |
| TBC_RTN | Masseanschluss für das Terminating Bias Circuit (TBC) des Anbaugeräts |
| CAN_H | Datenpin für positives CAN-Differenzsignal |
| CAN_L | Datenpin für negatives CAN-Differenzsignal |

Der Standard ISO 11783-2 sieht vor, dass zur Abschaltung des dem Implement BUS Breakaway Connector zugeordneten Abschlusswiderstands bzw. Terminating Bias Circuit der Steuerpin TBC_DIS mit dem Stromversorgungsanschluss ECU_PWR zu verbinden ist. Die beim Anbringen des Anbaugeräts an den Schnittstellenstecker anzuschließende anbaugeräteseitige Schnittstellenkupplung verfügt hierzu über eine entsprechende interne Kurzschlussbrücke.

Aus dem Vorliegen der Gleichspannung ECU_PWR am Steuerpin TBC_DIS des Schnittstellensteckers lässt sich somit unmittelbar auf einen beabsichtigten ISOBUS-Betrieb eines an dem landwirtschaftlichen Nutzfahrzeug angeschlossenen Anbaugeräts schließen. Vorteilhafterweise wird daher die am Steuerpin TBC_DIS des Schnittstellensteckers vorliegende Gleichspannung ECU_PWR von der Kontrolleinheit als Steuersignal zur Betätigung der Umschalteinrichtung interpretiert. Die Kontrolleinheit verbindet den Implement BUS Breakaway Connector mit dem als ISOBUS ausgebildeten ersten Datenkommunikationsnetzwerk durch Betätigung der Umschalteinrichtung ausschließlich bei Vorliegen dieses Steuersignals.

In allen anderen Fällen verbleibt die Umschalteinrichtung in ihrer unbetätigten Ausgangsstellung und verbindet den Implement BUS Breakaway Connector mit dem zweiten Datenkommunikationsnetzwerk.

Ist das zweite Datenkommunikationsnetzwerk als Ethernet-Datennetz ausgebildet, so können alle vier Leiter des Twisted-Quad-Kabels zum Zwecke der Datenübertragung genutzt werden, was die Verwendung eines geschirmten 4-adrigen 100BASE_TX Ethernet-Datennetzes mit einer Datenübertragungsrate von 100 Mbit/s ermöglicht. Abweichend kann es sich jedoch auch um ein beliebiges anderes Ethernet-Datennetz handeln. In diesem Zusammenhang seien insbesondere auf dem IEEE Standard 802.3 100Base T2 aufbauende oder vergleichbare ungeschirmte 2-adrige Ethernet-Datennetze mit einer Datenübertragungsrate von 100 Mbit/s erwähnt.

Beispielhaft kann im Falle eines 100BASE_TX bzw. 100BASE_T2 Ethernet-Datennetzes die folgende Leitungszuordnung getroffen werden:

| ISOBUS | Ethernet 100BASE_TX | Ethernet 100BASE_T2 |
|---|---|---|
| CAN_H | RX+ | ETH+ |
| CAN_L | RX- | ETH- |
| TBC_PWR | TX+ | - |
| TBC_RTN | TX- | - |

Die erfindungsgemäße Datenkommunikationsschnittstelle wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein erstes Ausführungsbeispiel der erfindungsgemäßen Datenkommunikationsschnittstelle für ein landwirtschaftliches Nutzfahrzeug,
- Fig. 2: ein zweites Ausführungsbeispiel der erfindungsgemäßen Datenkommunikationsschnittstelle für ein landwirtschaftliches Nutzfahrzeug, und
- Fig. 3: einen als Implement BUS Breakaway Connector (IBBC) ausgebildeten Schnittstellenstecker zur Verwendung in einer erfindungsgemäßen Datenkommunikationsschnittstelle.

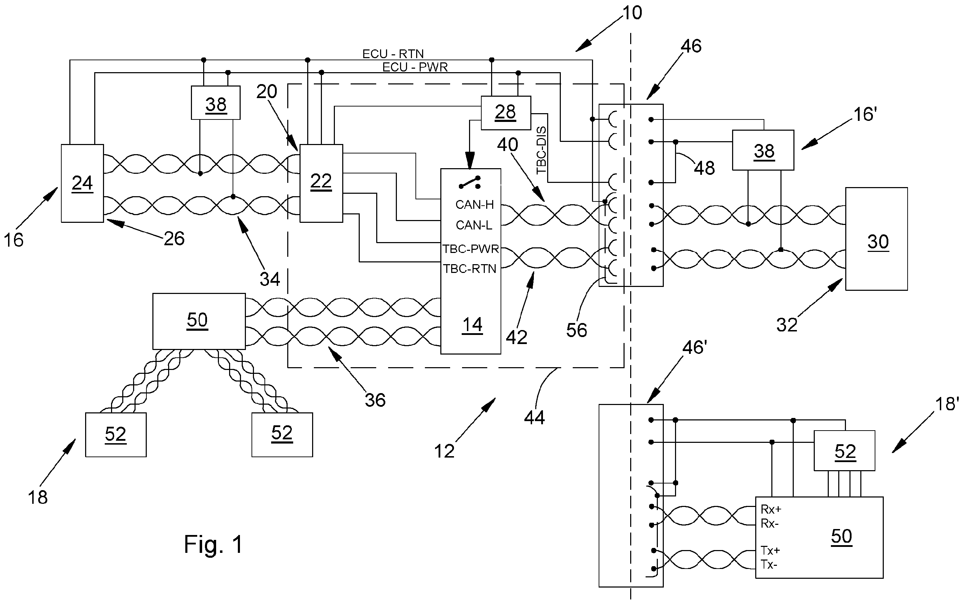

Fig. 1 zeigt ein erstes Ausführungsbeispiel der erfindungsgemäßen Datenkommunikationsschnittstelle für ein landwirtschaftliches Nutzfahrzeug. Bei dem landwirtschaftlichen Nutzfahrzeug handelt es sich um einen landwirtschaftlichen Traktor mit einem daran anbringbaren Anbaugerät.

Die in dem landwirtschaftlichen Traktor angeordnete Datenkommunikationsschnittstelle 10 umfasst einen Schnittstellenstecker 12, der mittels einer elektrisch betätigbaren Umschalteinrichtung 14 wahlweise mit einem ersten Datenkommunikationsnetzwerk 16 und einem zweiten Datenkommunikationsnetzwerk 18 verbindbar ist.

Zur Vermeidung von unerwünschten Leitungsreflexionen ist das erste Datenkommunikationsnetzwerk 16 an einem dem Schnittstellenstecker 12 zugeordneten ersten Leitungsende 20 mittels eines abschaltbaren ersten Abschlusswiderstands 22 terminiert. Ein zweiter Abschlusswiderstand 24 ist an einem entgegengesetzten zweiten Leitungsende 26 des ersten Datenkommunikationsnetzwerks 16 vorgesehen. Die beiden Abschlusswiderstände 22 und 24 weisen jeweils einen Wert in der Größenordnung von 120 Ohm auf.

Des Weiteren umfasst die Datenkommunikationsschnittstelle 10 eine Kontrolleinheit 28, die den Schnittstellenstecker 12 durch entsprechende Betätigung der Umschalteinrichtung 14 ausschließlich dann mit dem ersten Datenkommunikationsnetzwerk 16 verbindet, wenn diese auf das Vorliegen eines zur Abschaltung des ersten Abschlusswiderstands 22 vorgesehenen Steuersignals schließt.

Der erste Abschlusswiderstand 22 ist mit der als Halbleiterschalter ausgebildeten Umschalteinrichtung 14 und der Kontrolleinheit 28 in ein gemeinsames Gehäuse des Schnittstellensteckers 12 eingebaut.

Die beiden Datenkommunikationsnetzwerke 16 und 18 lassen sich über den gemeinsamen Schnittstellenstecker 12 extern erweitern. Die externe Erweiterung kann beispielsweise zum Betreiben eines mit einem entsprechenden Netzwerkabschnitt 16' bzw. 18' ausgestatteten Anbaugeräts dienen. Wird der zusätzliche Netzwerkabschnitt 16' bzw. 18' des Anbaugeräts an den Schnittstellenstecker 12 angeschlossen, so muss im Falle des ersten Datenkommunikationsnetzwerks 16 der dem Schnittstellenstecker 12 zugeordnete erste Abschlusswiderstand 22 abgeschaltet werden. Die Terminierung hat dann mittels eines dem zusätzlichen Netzwerkabschnitt 16' zugeordneten dritten Abschlusswiderstands 30 zu erfolgen.

Dieser ist an einem dritten Leitungsende 32 des zusätzlichen Netzwerkabschnitts 16' vorgesehen. Folglich stellen das Vorliegen des Steuersignals sowie die damit einhergehende Abschaltung des ersten Abschlusswiderstands 22 zuverlässige Hinweise auf die gewünschte Bereitstellung des ersten Datenkommunikationsnetzwerks 16 dar. In allen anderen Fällen verbleibt die Umschalteinrichtung 14 in ihrer unbetätigten Ausgangsstellung und verbindet den Schnittstellenstecker 12 mit dem zweiten Datenkommunikationsnetzwerk 18.

Beispielsgemäß handelt es sich bei dem ersten Datenkommunikationsnetzwerk 16 um einen CAN-Datenbus 34 und bei dem zweiten Datenkommunikationsnetzwerk 18 um ein Ethernet-Datennetz 36.

Der CAN-Datenbus 34 ist als linearer Bus ausgebildet, bei dem eine Vielzahl unterschiedlicher Steuergeräte 38 zur Überwachung und Steuerung von Betriebsfunktionen des landwirtschaftlichen Traktors sowie eines daran angebrachten Anbaugeräts parallel an einer zentralen Datenleitung anschließbar ist.

Genauer gesagt ist der CAN-Datenbus 34 als ISOBUS entsprechend dem Standard ISO 11783 ausgebildet. Der Standard ISO 11783 spezifiziert ein serielles Datenkommunikationsnetzwerk zur Steuerung land- und forstwirtschaftlicher Nutzfahrzeuge einschließlich zugehöriger ISOBUS-basierter Anbaugeräte. Das serielle Datenkommunikationsnetzwerk umfasst zwei ungeschirmte Twisted-Pair-Leiterpaare 40 und 42 in Gestalt eines Twisted-Quad-Kabels, wobei das erste Twisted-Pair-Leiterpaar 40 der eigentlichen Datenübertragung und das zweite Twisted-Pair-Leiterpaar 42 der Stromversorgung der als aktive Widerstandsschaltungen bzw.

Terminating Bias Circuit (TBC) ausgebildeten Abschlusswiderstände 22, 24 und 30 dient. Die Übertragung der Daten über das erste Twisted-Pair-Leiterpaar 44 erfolgt hierbei mit einer Datenübertragungsrate von 250 kbit/s.

Das Ethernet-Datennetz 36 ist gemäß dem Internet Protocol oder als Echtzeit-Ethernet ausgebildet. Ausgehend vom OSI-Modell ist es der Kontrolleinheit 28 möglich, eine Unterscheidung durch geeignete Auswertung des Data Link Layers zu treffen. Insofern erfolgt auf der Softwareebene eine weitere Unterteilung des zweiten Datenkommunikationsnetzwerks 18.

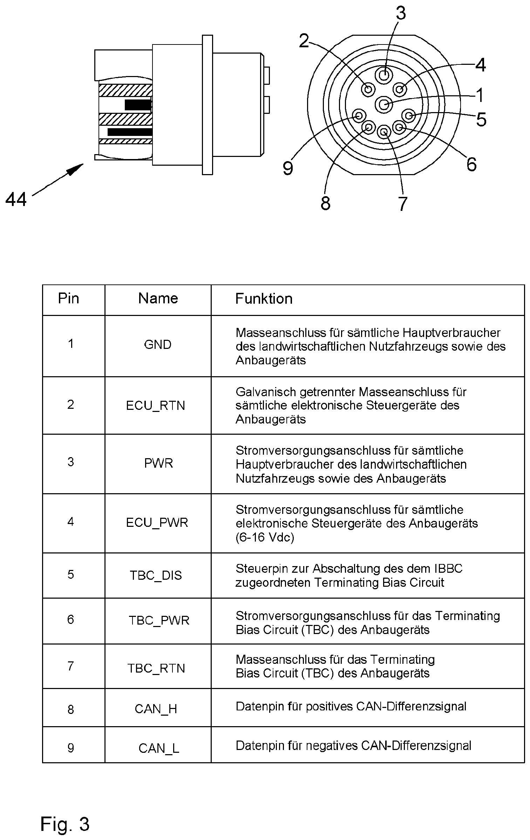

Beispielsgemäß ist der Schnittstellenstecker 12 als Implement BUS Breakaway Connector 44 entsprechend dem Standard ISO 11783-2 ausgebildet, dessen konstruktive Ausgestaltung nebst der zugehörigen Pin- bzw. Anschlussbelegung in Fig. 3 veranschaulicht ist. Der im Heckbereich des landwirtschaftlichen Traktors angebrachte Implement BUS Breakaway Connector 44 erlaubt einen Anschluss und Betrieb sämtlicher ISOBUS-basierter Anbaugeräte und umfasst neben verschiedenen Datenübertragungs- bzw. Steuerpins eine Vielzahl von Stromversorgungs- und Masseanschlüssen.

Für die Belange der vorliegenden Erfindung sind die folgenden Pins bzw. Anschlüsse des Implement BUS Breakaway Connector 44 von Bedeutung, wobei die verwendeten Abkürzungen dem Standard ISO 11783-2 entnommen sind:

| | |
|---|---|
| ECU_PWR | Stromversorgungsanschluss für sämtliche elektronische Steuergeräte des Anbaugeräts (6-16 Vdc) |
| ECU_RTN | Galvanisch getrennter Masseanschluss für sämtliche elektronische Steuergeräte des Anbaugeräts |
| TBC_DIS | Steuerpin zur Abschaltung des dem IBBC zugeordneten Terminating Bias Circuit. |
| TBC_PWR | Stromversorgungsanschluss für das Terminating Bias Circuit (TBC) des Anbaugeräts |
| TBC_RTN | Masseanschluss für das Terminating Bias Circuit (TBC) des Anbaugeräts |
| CAN_H | Datenpin für positives CAN-Differenzsignal |
| CAN_L | Datenpin für negatives CAN-Differenzsignal |

Der Standard ISO 11783-2 sieht vor, dass zur Abschaltung des dem Implement BUS Breakaway Connector 44 zugeordneten ersten Abschlusswiderstands 22 bzw. Terminating Bias Circuit der Steuerpin TBC_DIS mit dem Stromversorgungsanschluss ECU_PWR zu verbinden ist. Die beim Anbringen des Anbaugeräts an den Schnittstellenstecker 12 anzuschließende anbaugeräteseitige Schnittstellenkupplung 46 verfügt hierzu über eine entsprechende interne Kurzschlussbrücke 48.

Aus dem Vorliegen der Gleichspannung ECU_PWR am Steuerpin TBC_DIS des Schnittstellensteckers 12 lässt sich somit unmittelbar auf einen beabsichtigten ISOBUS-Betrieb eines an dem landwirtschaftlichen Traktor angeschlossenen Anbaugeräts schließen. Die am Steuerpin TBC_DIS des Schnittstellensteckers 12 vorliegende Gleichspannung ECU_PWR wird daher von der Kontrolleinheit 28 als Steuersignal zur Betätigung der Umschalteinrichtung 14 interpretiert. Die Kontrolleinheit 28 verbindet den Implement BUS Breakaway Connector 44 mit dem als ISOBUS ausgebildeten ersten Datenkommunikationsnetzwerk 16 durch Betätigung der Umschalteinrichtung 14 ausschließlich bei Vorliegen dieses Steuersignals.

In allen anderen Fällen verbleibt die Umschalteinrichtung 14 in ihrer unbetätigten Ausgangsstellung und verbindet den Implement BUS Breakaway Connector 44 mit dem als Ethernet-Datennetz 36 ausgebildeten zweiten Datenkommunikationsnetzwerk 18, dessen grundsätzlicher Aufbau in Fig. 1 durch zentrale Ethernet-Weichen 50 sowie mehrere daran angeschlossene Steuergeräte 52 veranschaulicht ist.

Beispielsgemäß werden alle vier zur Verfügung stehenden Leiter des Twisted-Quad-Kabels zum Zwecke der Datenübertragung genutzt, wobei im vorliegenden Fall ein 4-adriges geschirmtes 100BASE_TX Ethernet-Datennetz 36 mit einer Datenübertragungsrate von 100 Mbit/s Verwendung findet. Um die geforderte Konformität mit der EMV-Richtlinie zu gewährleisten, ist eine zusätzliche Abschirmung 56 bzw. 56' der Steuerpins TBC_PWR, CAN_H, CAN_L und TBC_RTN des Schnittstellensteckers 12 sowie der zugehörigen Schnittstellenkupplung 46' des Anbaugeräts vorgesehen.

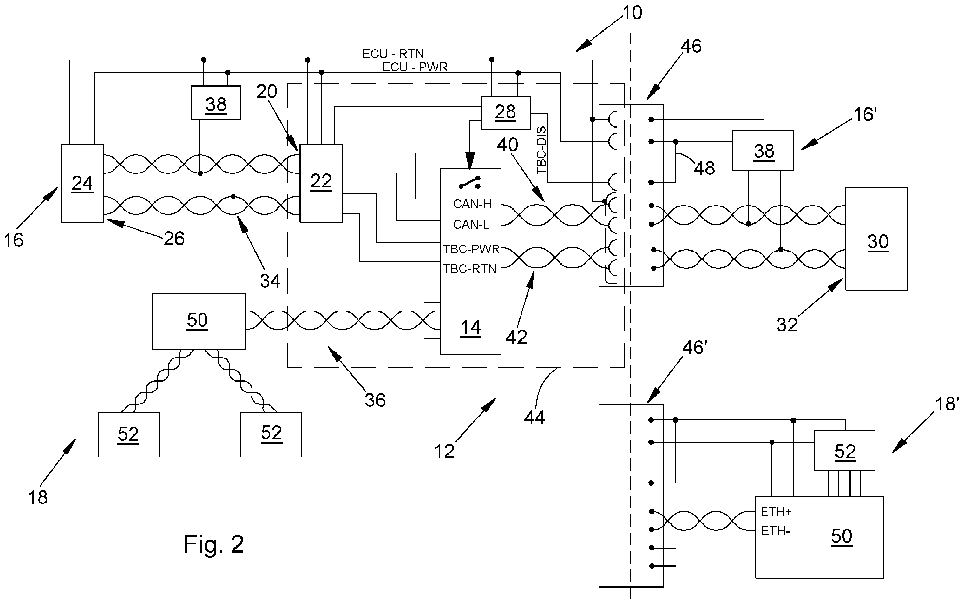

Fig. 2 zeigt ein zweites Ausführungsbeispiel der erfindungsgemäßen Datenkommunikationsschnittstelle für ein landwirtschaftliches Nutzfahrzeug. Dieses unterscheidet sich von dem in Fig. 1 dargestellten ersten Ausführungsbeispiel bezüglich der Ausbildung des zweiten Datenkommunikationsnetzwerks 18 als ungeschirmtes 2-adriges 100Base-T2 Ethernet-Datennetz 36 mit einer Datenübertragungsrate von 100 Mbit/s. Hierbei werden lediglich zwei der insgesamt vier zur Verfügung stehenden Leiter des Twisted-Quad-Kabels zum Zwecke der Datenübertragung genutzt. Eine zusätzliche Abschirmung des Schnittstellensteckers 12 kann in diesem Fall entfallen.

## Patentansprüche

1. Datenkommunikationsschnittstelle für ein landwirtschaftliches Nutzfahrzeug, insbesondere einen landwirtschaftlichen Traktor, mit einem Schnittstellenstecker (12), der ein Gehäuse aufweist, in das eine elektrische betätigbare Umschalteinrichtung (14), eine Kontrolleinheit (28) sowie ein abschaltbarer Abschlusswiderstand (22) eingebaut sind, wobei der Schnittstellenstecker (12) mittels der elektrisch betätigbaren Umschalteinrichtung (14) wahlweise mit einem ersten Datenkommunikationsnetzwerk (16) in Gestalt eines CAN-Datenbusses (34) und einem zweiten Datenkommunikationsnetzwerk (18) in Gestalt eines Ethernet-Datennetzes (36) verbindbar ist, wobei der CAN-Datenbus (34) an einem dem Schnittstellenstecker (12) zugeordneten Leitungsende (20) mittels des abschaltbaren Abschlusswiderstands (22) terminiert ist und die Kontrolleinheit (28) den Schnittstellenstecker (12) durch entsprechende Betätigung der Umschalteinrichtung (14) ausschließlich dann mit dem CAN-Datenbus (34) verbindet, wenn diese auf das Vorliegen eines zur Abschaltung des Abschlusswiderstands (22) vorgesehenen Steuersignals schließt.

2. Datenkommunikationsschnittstelle nach Anspruch 1, **dadurch gekennzeichnet, dass** der CAN-Datenbus (34) als ISOBUS entsprechend dem Standard ISO 11783 ausgebildet ist.

3. Datenkommunikationsschnittstelle nach Anspruch 1, **dadurch gekennzeichnet, dass** das Ethernet-Datennetz (36) gemäß dem Internet Protocol oder als Echtzeit-Ethernet ausgebildet ist.

4. Datenkommunikationsschnittstelle nach Anspruch 2, **dadurch gekennzeichnet, dass** der Schnittstellenstecker (12) als Implement BUS Breakaway Connector (44) entsprechend dem Standard ISO 11783-2 ausgebildet ist.

5. Landwirtschaftliches Nutzfahrzeug, insbesondere landwirtschaftlicher Traktor, mit einer Datenkommunikationsschnittstelle (10) nach einem der Ansprüche 1 bis 4.

## Claims

1. Data communication interface for an agricultural utility vehicle, particularly an agricultural tractor, having an interface connector (12) that has a housing in which an electrically operatable changeover device (14), a control unit (28) and a disconnectable terminating resistor (22) are incorporated, wherein the interface connector (12) can be connected either to a first data communication network (16) in the form of a CAN data bus (34) or to a second data communication network (18) in the form of an Ethernet data network (36) by means of the electrically operatable changeover device (14), wherein the CAN data bus (34) is terminated at a line end (20) associated with the interface connector (12) by means of the disconnectable terminating resistor (22) and the control unit (28) connects the interface connector (12) to the CAN data bus (34) by means of appropriate operating of the changeover device (14) exclusively when it infers the presence of a control signal that is provided for disconnecting the terminating resistor (22).

2. Data communication interface according to Claim 1, **characterized in that** the CAN data bus (34) is in the form of an ISOBUS according to the ISO 11783 standard.

3. Data communication interface according to Claim 1, **characterized in that** the Ethernet data network (36) is designed on the basis of the Internet Protocol or as a realtime Ethernet.

4. Data communication interface according to Claim 2, **characterized in that** the interface connector (12) is in the form of an Implement BUS Breakaway Connector (44) according to the ISO 11783-2 standard.

5. Agricultural utility vehicle, particularly agricultural tractor, having a data communication interface (10) according to one of Claims 1 to 4.

## Revendications

1. Interface de communication de données pour un véhicule utilitaire agricole, en particulier un tracteur agricole, comprenant un connecteur d'interface (12) qui comporte un boîtier dans lequel sont intégrés un dispositif de commutation (14) pouvant être actionné électriquement, une unité de commande (28) ainsi qu'une résistance de terminaison (22) pouvant être mise hors circuit, dans lequel le connecteur d'interface (12) peut être relié de manière sélective au moyen du dispositif de commutation (14) pouvant être actionné électriquement à un premier réseau de communication de données (16) sous la forme d'un bus de données CAN (34) et à un deuxième réseau de communication de données (18) sous la forme d'un réseau de données Ethernet (36), dans lequel le bus de données CAN (34) se termine au niveau d'une extrémité de ligne (20) associée au connecteur d'interface (12) au moyen de la résistance de terminaison (22) pouvant être mise hors circuit et l'unité de commande (28) ne relie le connecteur d'interface (12), par un actionnement correspondant du dispositif de commutation (14), exclusivement au bus de données CAN (34), que lorsqu'elle détermine qu'un signal de commande prévu pour mettre hors circuit la résistance de terminaison (22) est présent.

2. Interface de communication de données selon la revendication 1, **caractérisée en ce que** le bus de données CAN (34) est réalisé sous la forme d'un bus ISOBUS correspondant à la norme ISO 11783.

3. Interface de communication de données selon la revendication 1, **caractérisée en ce que** le réseau de données Ethernet (36) est réalisé conformément au protocole internet ou sous forme d'Ethernet temps réel.

4. Interface de communication de données selon la revendication 2, **caractérisée en ce que** le connecteur d'interface (12) est réalisé sous la forme d'un connecteur de type Implement BUS Breakaway (44) correspondant à la norme ISO 11783-2.

5. Véhicule utilitaire agricole, en particulier tracteur agricole, comportant une interface de communication de données (10) selon l'une quelconque des revendications 1 à 4.
